# EUROPÄISCHE PATENTSCHRIFT

(11) **EP 2 552 925 B1**
(45) Veröffentlichungstag und Bekanntmachung des Hinweises auf die Patenterteilung: **23.07.2014**
(21) Anmeldenummer: 11708247.9
(22) Anmeldetag: 15.03.2011
(51) Int. Cl.: C07F 7/18

(54) **VERFAHREN ZUR HERSTELLUNG VON SILICIUMHALTIGEN AZODICARBAMIDEN**
PROCESS FOR THE PREPARATION OF SILICON CONTAINING AZODICARBAMIDES
PROCEDE DE LA PREPARATION DES AZODICARBAMIDES CONTENANT SILICIUM

(30) Priorität: 29.03.2010 DE 102010003387
(43) Veröffentlichungstag der Anmeldung: 06.02.2013
(73) Patentinhaber: Evonik Degussa GmbH, 45128 Essen (DE)
(72) Erfinder: KORTH, Karsten, 79639 Grenzach-Wyhlen (DE); KECK, Julia, 67258 Hessheim (DE); WITZSCHE, Susann, 79618 Rheinfelden (DE); KLOCKMANN, Oliver, 52382 Niederzier (DE); MONKIEWICZ, Jaroslaw, 79618 Rheinfelden (DE); SPRINGER, Christian, 79618 Rheinfelden (DE)
(86) Internationale Anmeldenummer: PCT/EP2011/053824
(87) Internationale Veröffentlichungsnummer: WO 2011/120792

(56) Entgegenhaltungen:
- DE-A1- 2 704 506
- US-A1- 2009 186 961
- US-A1- 2009 234 066

## Beschreibung

Die Erfindung betrifft ein Verfahren zur Herstellung von siliciumhaltigen Azodicarbamiden.

Aus DE 2704506 sind Verbindungen der allgemeinen Formel Y-X-CO-N=N-CO-X¹-Z und deren Verwendung in füllstoffhaltigen Kautschukmischungen bekannt.

Ferner sind aus US 20090234066 A1 Verbindungen des Typs A-CO-N=N-CO-Z-G bekannt, die zusammen mit schwefelhaltigen Silanen in isoprenkautschukhaltigen Kautschukmischungen eingesetzt werden.

Aus US 20090186961 A1 sind Verbindungen des Typs A-CO-N=N-CO-Z-G bekannt, die zusammen mit Beschichtungsmitteln in isoprenkautschukhaltigen Kautschukmischungen eingesetzt werden.

Aufgabe der vorliegenden Erfindung ist es, ein Verfahren zur Verfügung zu stellen, welches gegenüber den Verfahren aus dem Stand der Technik weniger Synthesestufen benötigt, auf die Oxidation von Hydrazinderivaten verzichtet und hohe Ausbeuten ermöglicht.

Gegenstand der Erfindung ist ein Verfahren zur Herstellung von siliciumhaltigen Azodicarbamiden der allgemeinen Formel I

(R¹)₃₋ₐ(R²)ₐSi-R¹-NH-C(O)-N=N-C(O)-NH-R¹-Si (R¹)₃₋ₐ(R²)ₐ (I),

durch Umsetzung von Azobiscarboxy-Verbindungen der allgemeinen Formel II

R³-X¹-C(O)-N=N-C(O)-X¹-R⁴ (II)

mit Aminosilanen der allgemeinen Formel III

(R¹)₃₋ₐ (R²)ₐSi-R^{I}-NH₂ (III),

wobei a unabhängig voneinander 1, 2 oder 3 ist,
R¹ unabhängig voneinander substituierte oder unsubstituierte C1-C18-, bevorzugt C1-C10-, besonders bevorzugt C1-C6-, ganz besonders bevorzugt C1-, Alkylgruppen, C5-C18-, bevorzugt C6-, Cycloalkylgruppen, oder C6-C18-Arylgruppen, bevorzugt Phenyl, sind,
R² unabhängig voneinander ein -OH, eine substituierte oder unsubstituierte C1-C18-Alkoxygruppe, bevorzugt CH₃-O-, C₂H₅-O-, C₃H₇-O-, C₁₂H₂₅-O-, C₁₄H₂₉-O-, C₁₆H₃₃-O-, C₁₈H₃₇-O-, besonders bevorzugt C₂H₅-O-, oder eine C5-C18-Cycloalkoxygruppen sind,
R^{I} eine verzweigte oder unverzweigte, gesättigte oder ungesättigte, aliphatische, aromatische oder gemischt aliphatische /aromatische zweibindige C₁-C₃₀-, bevorzugt C₁-C₂₀ -, besonders bevorzugt C₁-C₁₀-, ganz besonders bevorzugt C₁-C₇ -, Kohlenwasserstoffgruppe, die gegebenenfalls mit F-, Cl-, Br-, I-, -CN oder HSsubstituiert ist, sind,
X¹ unabhängig voneinander O, NH oder N-A¹, mit A¹ gleich C1 - C12-, bevorzugt C1 - C4-, besonders bevorzugt C1-, Alkylgruppe oder Arylgruppe, bevorzugt Phenyl oder substituiertes Phenyl, sind und
R³ und R⁴ unabhängig voneinander ein H, ein C1-C18-Alkyl-, vorzugsweise Methyl, Ethyl oder iso-Propyl, eine Benzylgruppe (-CH₂-C₆H₅) oder eine Alkylpolyethergruppe (CH₂-CH₂-O)ₙ-R⁵ oder (CH (CH₃) -CH₂-O)ₙ-R⁵, vorzugsweise Methyl- (O-CH₂-CH₂)ₙ-, Ethyl-(O-CH₂-CH₂)ₙ-, Propyl- (O-CH₂-CH₂)ₙ-, Butyl- (O-CH₂-CH₂) - oder Hexyl-(O-CH₂-CH₂)ₙ-, mit n im Mittel gleich 1 bis 18, bevorzugt 1 bis 10, besonders bevorzugt 1 bis 8, ganz besonders bevorzugt 1 bis 5, sind und
R⁵ unabhängig voneinander eine verzweigte oder unverzweigte, gesättigte oder ungesättigte einbindige C1-C32-, vorzugsweise C2-C25-, besonders bevorzugt C3-C18-, Kohlenwasserstoffkette ist.

Siliciumhaltige Azobiscarbamide können Mischungen von siliciumhaltigen Azobiscarbamiden der allgemeinen Formel I sein.

Das Verfahrensprodukt kann Oligomere, die durch Hydrolyse und Kondensation der Alkoxysilanfunktionen der siliciumhaltigen Azobiscarbamiden der allgemeinen Formel I entstehen, enthalten.

Die als Edukt eingesetzte Azobiscarboxy-Verbindung kann eine Mischung von Azobiscarboxy-Verbindungen der allgemeinen Formel II sein.

Das als Edukt eingesetzte Aminosilan kann eine Mischung von Aminosilanen der allgemeinen Formel III sein.

Die eingesetzten Aminosilane können Oligomere, die durch Hydrolyse und Kondensation der Alkoxysilanfunktionen der Aminosilane der allgemeine Formel III entstehen, enthalten.

R^{I} kann bevorzugt -CH₂-, -CH₂CH₂-, -CH₂CH₂CH₂-, -CH₂CH₂CH₂CH₂-, -CH(CH₃)-, -CH₂CH(CH₃)-, -CH(CH₃)CH₂-, -C(CH₃)₂-, -CH(C₂H₅)-, -CH₂CH₂CH(CH₃)-, -CH(CH₃)CH₂CH₂-,-CH₂CH(CH₃)CH₂-, -CH₂CH₂CH₂CH₂CH₂-, -CH₂CH₂CH₂CH₂CH₂CH₂-, -CH₂CH₂CH₂CH₂CH₂CH₂CH₂-, -CH₂CH₂CH₂CH₂CH₂CH₂CH₂CH₂-, -CH₂CH₂CH₂CH₂CH₂CH₂CH₂CH₂CH₂-, -CH₂CH₂CH₂CH₂CH₂CH₂CH₂CH₂CH₂CH₂-, -CH₂CH₂CH₂CH₂CH₂CH₂CH₂CH₂CH₂CH₂CH₂CH₂-, -CH₂CH₂CH₂CH₂CH₂CH₂CH₂CH₂CH₂CH₂CH₂CH₂CH₂CH₂-, -CH₂CH₂CH₂CH₂CH₂CH₂CH₂CH₂CH₂CH₂CH₂CH₂CH₂CH₂CH₂CH₂-, -CH₂CH₂CH₂CH₂CH₂CH₂CH₂CH₂CH₂CH₂CH₂CH₂CH₂CH₂CH₂CH₂CH₂CH₂-oder 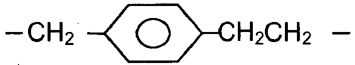 bzw. -CH₂-CH₂-C₆H₄-CH₂-bedeuten.

R⁵ kann bevorzugt H, Methyl, Ethyl, n-Propyl, iso-Propyl, Butyl oder Phenyl sein.

Verbindungen der allgemeinen Formel I können bevorzugt sein:
(EtO)₃Si-CH₂-NH-CO-N=N-CO-NH-CH₂-Si (OEt) ₃, (EtO)₃Si-CH₂-CH₂-NH-CO-N=N-CO-NH-CH₂-CH₂-Si (OEt) ₃, (EtO)₃Si-CH₂-CH₂-CH₂-NH-CO-N=N-CO-NH-CH₂-CH₂-CH₂-Si(OEt)₃, (EtO)₃Si-CH₂-CH₂-CH₂-CH₂-NH-CO-N=N-CO-NH-CH₂-CH₂-CH₂-CH₂-Si (OEt) ₃, (EtO)₃Si-(CH₂)₁₁-NH-CO-N=N-CO-NH-(CH₂) ₁₁-Si(OEt)₃, (EtO)₃Si-(CH₂)₁₂-NH-CO-N=N-CO-NH-(CH₂)₁₂-Si(OEt)₃, (EtO)₃Si-CH₂CH(CH₃)CH₂-NH-CO-N=N-CO-NH-CH₂CH(CH₃)CH₂-Si(OEt)₃, (EtO)₃Si-CH₂-CH₂-C₆H₄-CH₂-NH-CO-N=N-CO-NH-CH₂-C₆H₄-CH₂-CH₂-Si(OEt)₃, (EtO)₃Si-CH₂-CH₂-C₆H₄-NH-CO-N=N-CO-NH-C₆H₄-CH₂-CH₂-Si (OEt) ₃,
(MeO)₃Si-CH₂-NH-CO-N=N-CO-NH-CH₂-Si(OMe)₃, (MeO)₃Si-CH₂-CH₂-NH-CO-N=N-CO-NH-CH₂-CH₂-Si(OMe)₃, (MeO) ₃Si-CH₂-CH₂-CH₂-NH-CO-N=N-CO-NH-CH₂-CH₂-CH₂-Si(OMe)₃, (MeO)₃Si-CH₂-CH₂-CH₂-CH₂-NH-CO-N=N-CO-NH-CH₂-CH₂-CH₂-CH₂-Si(OMe)₃, (MeO)₃Si-(CH₂)₁₁-NH-CO-N=N-CO-NH-(CH₂)₁₁-Si(OMe)₃, (MeO)₃Si-(CH₂)₁₂-NH-CO-N=N-CO-NH-(CH₂)₁₂-Si(OMe)₃, (MeO)₃Si-CH₂CH(CH₃)CH₂-NH-CO-N=N-CO-NH-CH₂CH(CH₃)CH₂-Si(OMe)₃, (MeO)₃Si-CH₂-CH₂-C₆H₄-CH₂-NH-CO-N=N-CO-NH-CH₂-C₆H₄-CH₂-CH₂-Si(OMe)₃ oder
(MeO)₃Si-CH₂-CH₂-C₆H₄-NH-CO-N=N-CO-NH-C₆H₄-CH₂-CH₂-Si(OMe)₃, mit Me=Methyl und Et=Ethyl.

Verbindungen der allgemeinen Formel II können bevorzugt sein:
H₂N-C(O)-N=N-C(O)-NH₂, R³-HN-C(O)-N=N-C(O)-NH-R⁴, besonders bevorzugt Me-HN-C(O)-N=N-C(O)-NH-Me, Et-HN-C(O)-N=N-C(O)-NH-Et, n-Pr-HN-C(O)-N=N-C(O)-NH-n-Pr, iso-Pr-HN-C(O)-N=N-C(O)-NH-iso-Pr, n-Bu-HN-C(O)-N=N-C(O)-NH-n-Bu, sec-Bu-HN-C(O)-N=N-C(O)-NH-sec-Bu, tert-Bu-HN-C(O)-N=N-C(PO)-NH-tert-Bu, Benzyl-HN-C(O)-N=N-C(O)-NH-Benzyl oder Phenyl-HN-C(O)-N=N-C(O)-NH-Phenyl,
R³-O-C(O)-N=N-C(O)-O-R⁴, besonders bevorzugt Et-O-C(O)-N=N-C(O)-O-Et, n-Pr-O-C(O)-N=N-C(O)-O-n-Pr, iso-Pr-O-C(O)-N=N-C(O)-O-iso-Pr, n-Bu-O-C(O)-N=N-C(O)-O-n-Bu, tert-Bu-O-C(O)-N=N-C(O)-O-tert-Bu, sec-Bu-O-C(O)-N=N-C(O)-O-sec-Bu, Cyclohexyl-O-C(O)-N=N-C(O)-O-Cyclohexyl oder Benzyl-O-C(O)-N=N-C(O)-O-Benzyl,
oder R⁵-(O-CH₂-CH₂)ₙ-O-C(O)-N=N-C(0)-O-(CH₂-CH₂-O)ₙ-R⁵ mit n = 1-10, besonders bevorzugt
   Me-(O-CH₂-CH₂)ₙ-O-C(O)-N=N-C(O)-O-(CH₂-CH₂-O)ₙ-Me, Et-(O-CH₂-CH₂)ₙ-O-C(O)-N=N-C(O)-O-(CH₂-CH₂-O)ₙ-Et, n-Pr-(O-CH₂-CH₂)ₙ-O-C(O)-N=N-C(O)-O-(CH₂-CH₂-O)ₙ-n-Pr, iso-Pr-(O-CH₂-CH₂)ₙ-O-C(O)-N=N-C(O)-O-(CH₂-CH₂-O)ₙ-iso-Pr,
   n-Bu-(O-CH₂-CH₂)ₙ-O-C(O)-N=N-C(O)-O-(CH₂-CH₂-O)ₙ-n-Bu, tert-Bu-(O-CH₂-CH₂)ₙ-O-C(O)-N=N-C(O)-O-(CH₂-CH₂-O)ₙ-t-Bu, sec-Bu-(O-CH₂-CH₂)ₙ-O-C(O)-N=N-C(O)-O-(CH₂-CH₂-O)ₙ-sec-Bu,
   Cyclohexyl-(O-CH₂-CH₂)ₙ-O-C(O)-N=N-C(O)-O-(CH₂-CH₂-O)ₙ-Cyclohexyl oder Benzyl-(O-CH₂-CH₂)ₙ-O-C(O)-N=N-C(O)-O-(CH₂-CH₂-O)ₙ-Benzyl, mit Me=Methyl, Et=Ethyl, n-Pr=n-Propyl, i-Pr=iso-Propyl, n-Bu=n-Butyl, sec-Bu=sec-Butyl und tert-Bu=tert-Butyl.

Verbindungen der allgemeinen Formel III können bevorzugt sein:
3-Aminopropyl(trimethoxysilan),
3-Aminopropyl(triethoxysilan),
3-Aminopropyl(diethoxymethoxysilan),
3-Aminopropyl(tripropoxysilan),
3-Aminopropyl(dipropoxymethoxysilan),
3-Aminopropyl(tridodecanoxysilan),
3-Aminopropyl(tritetradecanoxysilan),
3-Aminopropyl(trihexadecanoxysilan),
3-Aminopropyl(trioctadecanoxysilan),
3-Aminopropyl(didodecanoxy)tetradecanoxysilan,
3-Aminopropyl(dodecanoxy)tetradecanoxy(hexadecanoxy)sil an,

3-Aminopropyl(dimethoxymethylsilan),
3-Aminopropyl(methoxydimethylsilan),
3-Aminopropyl(hydroxydimethylsilan),
3-Aminopropyl(diethoxymethylsilan),
3-Aminopropyl(ethoxydimethylsilan),
3-Aminopropyl(dipropoxymethylsilan),
3-Aminopropyl(propoxydimethylsilan),
3-Aminopropyl(diisopropoxymethylsilan),
3-Aminopropyl(isopropoxydimethylsilan),
3-Aminopropyl(dibutoxymethylsilan),
3-Aminopropyl(butoxydimethylsilan),
3-Aminopropyl(disiobutoxymethylsilan),
3-Aminopropyl(isobutoxydimethylsilan),
3-Aminopropyl(didodecanoxymethylsilan),
3-Aminopropyl(dodecanoxydimethylsilan),
3-Aminopropyl(ditetradecanoxymethylsilan),
3-Aminopropyl(tetradecanoxydimethylsilan),

2-Aminoethyl(trimethoxysilan);
2-Aminoethyl(triethoxysilan),
2-Aminoethyl(diethoxymethoxysilan),
2-Aminoethyl(tripropoxysilan),
2-Aminoethyl(dipropoxymethoxysilan),
2-Aminoethyl(tridodecanoxysilan),
2-Aminoethyl(tritetradecanoxysilan),
2-Aminoethyl(trihexadecanoxysilan),
2-Aminoethyl(trioctadecanoxysilan),
2-Aminoethyl(didodecanoxy)tetradecanoxysilan,
2-Aminoethyl(dodecanoxy)tetradecanoxy(hexadecanoxy) silan,
2-Aminoethyl(dimethoxymethylsilan)_{;}
2-Aminoethyl(methoxydimethylsilan),
2-Aminoethyl(diethoxymethylsilan),
2-Aminoethyl(ethoxydimethylsilan),

1-Aminomethyl(trimethoxysilan),
1-Aminomethyl(triethoxysilan),
1-Aminomethyl(diethoxymethoxysilan),
1-Aminomethyl(dipropoxymethoxysilan),
1-Aminomethyl(tripropoxysilan),
1-Aminomethyl(trimethoxysilan),
1-Aminomethyl(dimethoxymethylsilan),
1-Aminomethyl(methoxydimethylsilan),
1-Aminomethyl(diethoxymethylsilan),
1-Aminomethyl(ethoxydimethylsilan),

3-Aminobutyl(trimethoxysilan),
3-Aminobutyl(triethoxysilan),
3-Aminobutyl(diethoxymethoxysilan),
3-Aminobutyl(tripropoxysilan),
3-Aminobutyl(dipropoxymethoxysilan),
3-Aminobutyl(dimethoxymethylsilan),
3-Aminobutyl(diethoxymethylsilan),
3-Aminobutyl(dimethylmethoxysilan),
3-Aminobutyl(dimethylethoxysilan),
3-Aminobutyl(tridodecanoxysilan),
3-Aminobutyl(tritetradecanoxysilan),
3-Aminobutyl(trihexadecanoxysilan),
3-Aminobutyl(didodecanoxy)tetradecanoxysilan,
3-Aminobutyl(dodecanoxy)tetradecanoxy(hexadecanoxy) silan,

3-Amino-2-methyl-propyl(trimethoxysilan),
3-Amino-2-methyl-propyl(triethoxysilan),
3-Amino-2-methyl-propyl(diethoxymethoxysilan),
3-Amino-2-methyl-propyl(tripropoxysilan),
3-Amino-2-methyl-propyl(dipropoxymethoxysilan),
3-Amino-2-methyl-propyl(tridodecanoxysilan),
3-Amino-2-methyl-propyl(tritetradecanoxysilan),
3-Amino-2-methyl-propyl(trihexadecanoxysilan),
3-Amino-2-methyl-propyl(trioctadecanoxysilan),
3-Amino-2-methyl-propyl(didodecanoxy)tetradecanoxy-silan,
3-Amino-2-methyl-propyl(dodecanoxy)tetradecanoxy-(hexadecanoxy)silan,
3-Amino-2-methyl-propyl(dimethoxymethylsilan),
3-Amino-2-methyl-propyl(methoxydimethylsilan),
3-Mercapto-2-methyl-propyl(diethoxymethylsilan),
3-Mercapto-2-methyl-propyl(ethoxydimethylsilan),
3-Mercapto-2-methyl-propyl(dipropoxymethylsilan),
3-Amino-2-methyl-propyl(propoxydimethylsilan),
3-Amino-2-methyl-propyl(diisopropoxymethylsilan),
3-Amino-2-methyl-propyl(isopropoxydimethylsilan),
3-Amino-2-methyl-propyl(dibutoxymethylsilan),
3-Amino-2-methyl-propyl(butoxydimethylsilan),
3-Amino-2-methyl-propyl(disiobutoxymethylsilan),
3-Amino-2-methyl-propyl(isobutoxydimethylsilan),
3-Amino-2-methyl-propyl(didodecanoxymethylsilan),
3-Amino-2-methyl-propyl(dodecanoxydimethylsilan),
3-Amino-2-methyl-propyl(ditetradecanoxymethylsilan)
oder 3-Amino-2-methyl-propyl (tetradecanoxydimethylsilan).

Das durch das erfindungsgemäße Verfahren erhältliche Produkt kann siliciumhaltigen Azobiscarbamide der allgemeinen Formel I in einer Reinheit von größer als 30 mol-%, bevorzugt größer als 50 mol-%, besonders bevorzugt größer als 75 mol-%, ganz besonders bevorzugt größer als 85 mol-%, enthalten.

Die relativen Gehaltsprozente der Verbindungen der allgemeinen Formel I in dem durch das erfindungsgemäße Verfahren erhaltenen Produkt werden durch Integration der ¹³C-NMR Integrale des Zielproduktes der allgemeinen Formel I gegen die Gesamtheit der ¹³C-NMR-Integrale bestimmt.

Die Umsetzung kann in Lösungsmitteln oder lösungsmittelfrei durchgeführt werden.

Im Verhältnis zu den eingesetzten Verbindungen der allgemeinen Formel II kann die Lösungsmittelmenge zwischen 1 Gew.-% und 5000 Gew.-%, bevorzugt zwischen 1 Gew.-% und 1000 Gew.-%, besonders bevorzugt zwischen 50 Gew.-% und 1000 Gew.-%, besonders bevorzugt zwischen 50 Gew.-% und 500 Gew.-%, betragen.

Im Verhältnis zu den eingesetzten Verbindungen der allgemeinen Formel II kann die Lösungsmittelmenge mehr als 1 Gew.-%, bevorzugt mehr als 10 Gew.-%, besonders bevorzugt mehr als 50 Gew.-% und ganz besonders bevorzugt mehr als 100 Gew.-%, betragen.

Das Lösungsmittel kann einen Siedepunkt von -100°C bis 250°C, vorzugsweise 0-150°C, besonders bevorzugt 20-100°C, haben.

Als Lösungsmittel kann eine alkoholische oder nichtalkoholische Verbindung eingesetzt werden.

Als Lösungsmittel können Gemische von alkoholischen und nichtalkoholischen Verbindungen eingesetzt werden.

Nichtalkoholische Lösungsmittel können halogenhaltige oder halogenfreie Lösungsmittel sein.

Halogenhaltige Lösungsmittel können bevorzugt CCl₄, CHCll₃, CH₂Cl₂, CH₃Cl, CCl₃-CCl₃, CHCl₂-CCl₃, CHCl₂-CHCl₂ oder CH₂Cl-CH₂Cl sein.

Als nichtalkoholische, halogenfreie Lösungsmittel können Alkane, Alkylcarbonate, Aromaten, substituierte Aromaten, bevorzugt alkylsubstituierte Aromaten, besonders bevorzugt Toluol, p-Xylol, m-Xylol oder o-Xylol, Ether, Mercaptane, Dialkylsulfide, Trialkylamine, Alkylphosphane oder Arylphosphane eingesetzt werden.

Bevorzugt können als Alkane reine Alkane oder Gemische von Alkanen, wie zum Beispiel Pentan, Hexan, Cyclohexan, Heptan oder Oktan, eingesetzt werden.

Als Alkylcarbonate können offenkettige oder ringförm8ige Carbonate verwendet werden.

Bevorzugt können als offenkettige Alkylcarbonate Dimethylcarbonat, Di-isopropylcarbonat oder Diethylcarbonat eingesetzt werden.

Bevorzugt können als ringförmige Alkylcarbonate Ethylencarbonat, 1-Methyl-ethylencarbonat, Propylencarbonat oder Glycerincarbonat eingesetzt werden.

Als alkoholische Lösungsmittel können geradkettige, verzweigte oder auch ringförmige Alkohole eingesetzt werden.

Als Alkohole können auch Gemische von Alkoholen eingesetzt werden.

Besonders bevorzugt können Alkohole die den jeweiligen Alkoxysubstituenten am Silicium in den Verbindungen der Formeln I und III entsprechen sowie Isopropanol und tert-Butanol eingesetzt werden.

Ganz besonders bevorzugt können als alkoholisches Lösungsmittel Methanol, Ethanol und Isopropanol eingesetzt werden.

Die Reaktion kann bevorzugt unter Luft- und/oder Wasserausschluß durchgeführt werden.

Die Reaktion kann unter Schutzgasatmosphäre durchgeführt werden, zum Beispiel unter Argon oder Stickstoff, bevorzugt unter Stickstoff.

Das erfindungsgemäße Verfahren kann bei Normaldruck, erhöhtem Druck oder reduziertem Druck durchgeführt werden.

Bevorzugt sind Normaldruck und reduzierter Druck.

Erhöhter Druck kann eine Druck von 1,1 bar bis 100 bar, bevorzugt von 1,5 bar bis 50 bar, besonders bevorzugt von 2 bar bis 20 bar und ganz besonders bevorzugt von 2 bis 10 bar, sein.

Reduzierter Druck kann ein Druck von 1 mbar bis 1000 mbar, bevorzugt 1 mbar bis 500 mbar, besonders bevorzugt 1 mbar bis 250 mbar, ganz besonders bevorzugt 5 mbar bis 100 mbar, sein.

Das erfindungsgemäße Verfahren kann zwischen -50°C und +200°C, bevorzugt zwischen -25°C und 150°C, besonders bevorzugt zwischen -10°C und 100°C, ganz besonders bevorzugt zwischen -10°C und 50°C, durchgeführt werden. Bei dem erfindungsgemäßen Verfahren können Verbindungen der allgemeinen Formel II zu Verbindungen der allgemeinen Formel III dosiert werden.

Bei dem erfindungsgemäßen Verfahren können Verbindungen der allgemeinen Formel III zu Verbindungen der allgemeinen Formel II dosiert werden.

Bei dem erfindungsgemäßen Verfahren können die Azobiscarboxy-Verbindungen der allgemeinen Formel II zu Aminosilanen der allgemeinen Formel III im molekularen Verhältnis von 1:1,80 bis 1:2,25, bevorzugt 1:1,90 bis 1:2,15, besonders bevorzugt im Verhältnis 1:1,95 bis 1:2,05, dosiert werden.

Bei der Umsetzung von Azobiscarboxy-Verbindungen der allgemeinen Formel II mit Aminosilanen der allgemeinen Formel III können vor, während oder nach der Reaktion Stabilisatoren zugesetzt werden.

Stabilisatoren können Monomere, Oligomere oder Polymere sein. Bevorzugt sind Oligomere und Polymere. Stabilisatoren können den thermisch bedingten Zerfall von Azoverbindungen inhibieren beziehungsweise verzögern.

Stabilisatoren können Radikalfänger sein. Stabilisatoren können den lichtinduzierten Zerfall von Azoverbindungen inhibieren beziehungsweise verzögern. Stabilisatoren können UV-Stabilisatoren sein. Stabilisatoren können Oxidationsreaktionen inhibieren beziehungsweise verzögern.

Stabilisatoren können anionische oder kationische Verbindungen sein.

Stabilisatoren können Heteroatome, wie Sauerstoff, Schwefel, Stickstoff oder Phosphor, enthalten.

Bei dem erfindungsgemäßen Verfahren können 0,001 bis 100 Gew.-%, bevorzugt 0,01 bis 50 Gew.-%, besonders bevorzugt 0,01 bis 10 Gew.-%, ganz besonders bevorzugt 0,1 bis 5 Gew.-%, Stabilisatoren, bezogen auf die Masse des eingesetzten Materials der allgemeinen Formel II, eingesetzt werden.

Bei dem erfindungsgemäßen Verfahren können mehr als 0,001 Gew.-%, bevorzugt mehr als 0,01 Gew.-%, besonders bevorzugt mehr als 0,1 Gew.-%, ganz besonders bevorzugt mehr als 1 Gew.-%, Stabilisatoren, bezogen auf die Masse des eingesetzten Materials der allgemeinen Formel II, eingesetzt werden.

Bei dem erfindungsgemäßen Verfahren können weniger als 100 Gew.-%, bevorzugt weniger als 25 Gew.-%, besonders bevorzugt weniger als 10 Gew.-%, ganz besonders bevorzugt mehr als 1 Gew.-%, Stabilisatoren, bezogen auf die Masse des eingesetzten Materials der allgemeinen Formel II, eingesetzt werden.

Das Produkt, hergestellt mit dem erfindungsgemäßen Verfahren, kann einen Restgehalt an Verbindungen der allgemeinen Formel II von weniger als 25 mol-%, bevorzugt weniger als 10 mol-%, besonders bevorzugt weniger als 5 mol-%, ganz besonders bevorzugt weniger als 3 mol-%, haben.

Die relativen mol-% der Verbindungen der allgemeinen Formel II in dem Produkt, hergestellt mit dem erfindungsgemäßen Verfahren, werden durch Integration der Carbonyl-C-Atome im ¹³C-NMR gegen die mol-% der Verbindungen der allgemeinen Formel I bestimmt.

Das Produkt, hergestellt mit dem erfindungsgemäßen Verfahren, kann einen Restgehalt an Verbindungen der allgemeinen Formel III von weniger als 25 mol-%, bevorzugt weniger als 10 mol-%, besonders bevorzugt weniger als 5 mol-%, ganz besonders bevorzugt weniger als 3 mol-%, haben.

Relative mol-% von Verbindungen der Formel III = (Integral aller C-Atome von R^{I} der Formel III benachbart zu N) / ((Integral aller C-Atome von R^{I} der Formel III benachbart zu N) + (Integral aller C-Atome von R^{I} der Formel I benachbart zu N)).

Für die Substanz der Formel III NH₂-CH₂-CH2-CH₂-Si(OEt)₃ wird zum Beispiel das Integral der folgenden C-Atome NH₂-CH₂- für die Bestimmung der relativen Gehalte verwendet.

Für die Substanz der Formel I [(EtO)₃Si-CH₂-CH₂-CH₂-NH-C(=O)-N=]₂ wird zum Beispiel das Integral der folgenden C-Atome -CH₂-NH-C(=O)-N= für die Bestimmung der relativen Gehalte verwendet.

Das Produkt, hergestellt mit dem erfindungsgemäßen Verfahren, kann Verbindungen der allgemeinen Formel IV, V und/oder VI

R³-X¹-C (O) -NH-NH-C (O) -X¹-R⁴ (IV),

(R¹)₃₋ₐ(R²)ₐSi-R^{I}-NH-C(O)-NH-NH-C(O)-NH-R^{I}-Si (R¹)₃₋ₐ(R²)ₐ (V),

(R¹)₃₋ₐ(R²)ₐSi-R^{I}-NH-CO-NH-NH-CO-X¹-R³ (VI),

enthalten.

Die siliciumhaltigen Azodicarbamide der allgemeinen Formel I können als Haftvermittler zwischen anorganischen Materialien, zum Beispiel Glaskugeln, Glasplittern, Glasoberflächen, Glasfasern, oder oxidischen Füllstoffen, bevorzugt Kieselsäuren wie gefällten Kieselsäuren und Flammkieselsäuren, und organischen Polymeren, zum Beispiel Duroplasten, Thermoplasten oder Elastomeren, beziehungsweise als Vernetzungsmittel und Oberflächenmodifizierungsmittel für oxidische Oberflächen verwendet werden.

Die siliciumhaltigen Azodicarbamide der allgemeinen Formel I können als Kopplungsreagenzien in gefüllten Kautschukmischungen, beispielsweise Reifenlaufflächen, technischen Gummiartikeln oder Schuhsolen, verwendet werden.

Vorteil des erfindungsgemäßen Verfahrens ist, dass die Herstellung von siliziumhaltigen Azodicarbamiden der allgemeinen Formel I in einem Syntheseschritt aus industriell etablierten Synthesebausteinen möglich ist.

Ein weiterer Vorteil des erfindungsgemäßen Verfahrens ist, dass auf die Oxidation von Hydrazinderivaten verzichtet werden kann und hohe Ausbeuten sowie hohe Reinheiten erreicht werden.

Ein weiterer Vorteil des erfindungsgemäßen Verfahrens ist, dass auf eine aufwendige Aufreinigung der erhaltenen Produkte verzichtet werden kann.

### Beispiele:

Es werden folgende Rohstoffe für die Beispiele verwendet:
- Di-isopropyl-azodicarboxylat (Firma Jayhawk Chemicals) mit >94% Reinheit (GC/Wärmeleitdetektor).
- 3-Aminopropyl(triethoxysilane) der Firma Evonik Degussa GmbH mit >98% Reinheit (GC/Wärmeleitdetektor).
- Pentan, CH₂Cl₂ und Isopropanol der Firmen Aldrich, Acros und Merck-Schuchardt.

### Beispiel 1: Herstellung von [(EtO)₃Si-(CH₂)₃-NH-C(=O)-N=]₂ in Pentan

In einem Kolben werden unter Schutzgas 164,2 g (742 mmol) 3-Aminopropyl(triethoxysilan) in 1000 g Pentan bei 0°C vorgelegt und gerührt. Es werden 75 g Diisopropyl(azodicarboxylat) (DIAD, 371 mmol) bei -5°C bis 5°C innerhalb von 30 min zu der Lösung getropft. Anschließend wird für weitere 30 min zwischen -5°C und 5°C gerührt. Anschließend wird das Kühlbad entfernt und die Lösung für 180 min gerührt, während sich die Mischung auf Raumtemperatur erwärmt. Alle flüchtigen Bestandteile (Pentan, Isopropanol) werden im Anschluß bei bis zu 6 mbar Druck am Rotationsverdampfer entfernt.

Das erhaltene rote Öl (194 g, >99% Ausbeute) enthält laut NMR-Untersuchungen das Zielprodukt in >85 mol-% Reinheit.

### Beispiel 2: Herstellung von [(EtO)₃Si-(CH₂)₃-NH-C(=O)-N=]₂ in CH₂Cl₂

In einem Kolben werden unter Schutzgas 164 g (742 mmol) 3-Aminopropyl(triethoxysilan) in 1000 g CH₂Cl₂ bei 0°C vorgelegt und gerührt. Es werden 75 g Diisopropyl(azodicarboxylat) (DIAD, 371 mmol) bei -5°C bis 5°C innerhalb von 30 min zu der Lösung getropft. Anschließend wird für weitere 30 min zwischen -5°C und 5°C gerührt. Anschließend wird das Kühlbad entfernt und die Lösung für 170 min gerührt, während sich die Mischung auf Raumtemperatur erwärmt. Alle flüchtigen Bestandteile (CH₂Cl₂, Isopropanol) werden im Anschluß bei bis zu 6 mbar Druck am Rotationsverdampfer entfernt.

Das erhaltene rote Öl (193,8 g, >99% Ausbeute) enthält laut NMR-Untersuchungen das Zielprodukt in >85 mol-% Reinheit.

## Patentansprüche

1. Verfahren zur Herstellung von siliciumhaltigen Azodicarbamiden der allgemeinen Formel I
(R¹)₃₋ₐ(R²)ₐSi-R^{I}-NH-C(O)-N=N-C(O)-NH-R^{I}-Si(R¹)₃₋ₐ(R²)ₐ (I),
durch Umsetzung von Azobiscarboxy-Verbindungen der allgemeinen Formel II
R³-X¹-C(O)-N=N-C(O)-X¹-R⁴ (II)
mit Aminosilanen der allgemeinen Formel III
(R¹)₃₋ₐ(R²)ₐSi-R^{I}-NH₂ (III),
wobei a unabhängig voneinander 1, 2 oder 3 ist, R¹ unabhängig voneinander substituierte oder unsubstituierte C1-C18-Alkylgruppen, C5-C18-Cycloalkylgruppen, oder C6-C18-Arylgruppen sind, R² unabhängig voneinander ein -OH, eine substituierte oder unsubstituierte C1-C18-Alkoxygruppe oder eine C5-C18-Cycloalkoxylgruppen sind,
R¹ eine verzweigte oder unverzweigte, gesättigte oder ungesättigte, aliphatische, aromatische oder gemischt aliphatische /aromatische zweibindige C₁-C₃₀-Kohlenwasserstoffgruppe, die gegebenenfalls mit F-, Cl-, Br-, I-, -CN oder HS- substituiert ist, sind,
X¹ unabhängig voneinander O, NH oder N-A¹, mit A¹ gleich C1 - C12-Alkylgruppe oder Arylgruppe sind und
R³ und R⁴ unabhängig voneinander ein H, ein C1-C18- Alkyl-, eine Benzylgruppe (-CH₂-C₆H₅) oder eine Alkylpolyethergruppe (CH₂-CH₂-O)ₙ-R⁵ oder (CH(CH₃)-CH₂-O)ₙ-R⁵, mit n im Mittel gleich 1 bis 18 sind und
R⁵ unabhängig voneinander eine verzweigte oder unverzweigte, gesättigte oder ungesättigte einbindige C1-C32-Kohlenwasserstoffkette ist.

2. Verfahren zur Herstellung von siliciumhaltigen Azodicarbamiden gemäß Anspruch 1, **dadurch gekennzeichnet, dass** die Azobiscarboxy-Verbindung der allgemeinen Formel II H₂N-C(O)-N=N-C(O)-NH₂, R³-O-C(O)-N=N-C(O)-O-R⁴ oder R³-HN-C(O)-N=N-C(O)- NH-R⁴ ist.

3. Verfahren zur Herstellung von siliciumhaltigen Azodicarbamiden gemäß Anspruch 1 oder 2, **dadurch gekennzeichnet, dass** das Aminosilan der allgemeinen Formel III 3-Aminopropyl(trimethoxysilan), 3-Aminopropyl(triethoxysilan), 3-Aminopropyl(dimethoxymethylsilan), 3-Aminopropyl(methoxydimethylsilan), 3-Aminopropyl(diethoxymethylsilan), 3-Aminopropyl(ethoxydimethylsilan) oder 3-Aminopropyl(tripropoxysilan) ist.

4. Verfahren zur Herstellung von siliciumhaltigen Azodicarbamiden gemäß Anspruch 1, **dadurch gekennzeichnet, dass** man die Umsetzung in einem Lösungsmittel durchführt.

5. Verfahren zur Herstellung von siliciumhaltigen Azodicarbamiden gemäß Anspruch 1, **dadurch gekennzeichnet, dass** man die Umsetzung lösungsmittelfrei durchführt.

6. Verfahren zur Herstellung von siliciumhaltigen Azodicarbamiden gemäß Anspruch 1, **dadurch gekennzeichnet, dass** die Umsetzung unter Luft- und/oder Wasserausschluß durchgeführt wird.

7. Verfahren zur Herstellung von siliciumhaltigen Azodicarbamiden gemäß Anspruch 1, **dadurch gekennzeichnet, dass** vor, während oder nach der Reaktion Stabilisatoren zugesetzt werden.

8. Verfahren zur Herstellung von siliciumhaltigen Azodicarbamiden gemäß Anspruch 2, **dadurch gekennzeichnet, dass** als Verbindung der allgemeinen Formel II C₃H₇-O-C(O)-N=N-C(O)-O-C₃H₇ oder C₆H₄-CH₂-O-C(O)-N=N-C(O)-O-CH₂-C₆H₄ eingesetzt wird.

9. Verfahren zur Herstellung von siliciumhaltigen Azodicarbamiden gemäß Anspruch 1, **dadurch gekennzeichnet, dass** man die Umsetzung bei Temperaturen zwischen -50°C und +200°C durchführt.

## Claims

1. Process for producing silicon-containing azodicarbamides of the general formula I
(R¹)₃₋ₐ(R²)ₐSi-R^{I}-NH-C(O)-N=N-C(O)-NH-R^{I}-Si(R¹)₃₋ₐ(R²)ₐ (I),
by reaction of azobiscarboxy compounds of the general formula II
R³-X¹-C(O)-N=N-C(O)-X¹-R⁴ (II)
with aminosilanes of the general formula III
(R¹)₃₋ₐ(R²)ₐSi-R¹-NH₂ (III),
where a is mutually independently 1, 2 or 3,
R¹ are mutually independently substituted or unsubstituted Cl-C18-alkyl groups, C5-C18-cycloalkyl groups, or C6-C18-aryl groups, R² are mutually independently an -OH, a substituted or unsubstituted Cl-C18-alkoxy group or a C5-C18-cycloalkoxy group,
R^{I} is a branched or unbranched, saturated or unsaturated, aliphatic, aromatic or mixed aliphatic/aromatic divalent C₁-C₃₀-hydrocarbon group, if appropriate substituted with F-, Cl-, Br-, I-, -CN or HS-,
X¹ are mutually independently 0, NH or N-A¹, where A¹ is C1-C12-alkyl group or aryl group and
R³ and R⁴ are mutually independently an H, a C1-C18-alkyl group, a benzyl group (-CH₂-C₆H₅) or an alkyl polyether group (CH₂-CH₂-O)ₙ-R⁵ or (CH(CH₃)-CH₂-O)ₙ-R⁵, where the average of n is from 1 to 18 and
R⁵ is mutually independently a branched or unbranched, saturated or unsaturated monovalent C1-C32-hydrocarbon chain.

2. Process for producing silicon-containing azodicarbamides according to Claim 1, **characterized in that** the azobiscarboxy compound of the general formula II is H₂N-C(O)-N=N-C(O)-NH₂, R³-O-C(O)-N=N-C(O)-O-R⁴ or R³-HN-C(O)-N=N-C(O)-NH-R⁴.

3. Process for producing silicon-containing azodicarbamides according to Claim 1 or 2, **characterized in that** the aminosilane of the general formula III is 3-aminopropyl(trimethoxysilane), 3-aminopropyl(triethoxysilane), 3-aminopropyl(dimethoxymethylsilane), 3-aminopropyl(methoxydimethylsilane), 3-aminopropyl(diethoxymethylsilane), 3-aminopropyl(ethoxydimethylsilane) or 3-aminopropyl(tripropoxysilane).

4. Process for producing silicon-containing azodicarbamides according to Claim 1, **characterized in that** the reaction is carried out in a solvent.

5. Process for producing silicon-containing azodicarbamides according to Claim 1, **characterized in that** the reaction is carried out with no solvent.

6. Process for producing silicon-containing azodicarbamides according to Claim 1, **characterized in that** the reaction is carried out with exclusion of air and/or with exclusion of water.

7. Process for producing silicon-containing azodicarbamides according to Claim 1, **characterized in that** prior to, during or after the reaction stabilizers are added.

8. Process for producing silicon-containing azodicarbamides according to Claim 2, **characterized in that** the compound used of the general formula II is C₃H₇-O-C(O)-N=N-C(O)-O-C₃H₇ or C₆H₄-CH₂-O-C(O)-N=N-C(O)-O-CH₂-C₆H₄.

9. Process for producing silicon-containing azodicarbamides according to Claim 1, **characterized in that** the reaction is carried out at temperatures from -50°C to +200°C.

## Revendications

1. Procédé pour la préparation d'azodicarbamides contenant du silicium de formule générale I
(R¹)₃₋ₐ(R²)ₐSi-R¹-NH-C(O)-N=N-C(O)-NH-R^{I}-Si(R¹)₃₋ₐ(R²)ₐ (I),
par transformation de composés azobiscarboxy de formule générale II
R³-X¹-C(O)-N=N-C(O)-X¹-R⁴ (II)
avec des aminosilanes de formule générale III
(R¹)₃₋ₐ(R²)ₐSi-R^{I}-NH₂ (III),
a valant, indépendamment l'un de l'autre, 1, 2 ou 3,
R¹ représentant, indépendamment les uns des autres, des groupes C₁-C₁₈-alkyle, C₅-C₁₈-cycloalkyle ou C₆-C₁₈-aryle, substitués ou non substitués,
R² représentant, indépendamment les uns des autres, un groupe -OH, un groupe C₁-C₁₈-alcoxy substitué ou non substitué ou un groupe C₅-C₁₈-cycloalcoxyle,
R^{I} représentant un groupe hydrocarboné en C₁-C₃₀ divalent, ramifié ou non ramifié, saturé ou insaturé, aliphatique, aromatique ou aliphatique/aromatique mixte, qui est le cas échéant substitué par F, Cl, Br, I, -CN ou HS-,
X¹ représentant, indépendamment l'un de l'autre, 0, NH ou N-A¹, A¹ représentant un groupe C₁-C₁₂-alkyle ou un groupe aryle et
R³ et R⁴ représentant, indépendamment l'un de l'autre, H, un groupe C₁-C₁₈-alkyle, un groupe benzyle (-CH₂-C₆H₅) ou un groupe alkylpolyéther (CH₂-CH₂-O)ₙ-R⁵ ou (CH(CH₃)-CH₂-O)ₙ-R⁵, n valant en moyenne 1 à 18 et
R⁵ représentant, indépendamment l'un de l'autre, une chaîne hydrocarbonée en C₁-C₃₂ monovalente, ramifiée ou non ramifiée, saturée ou insaturée.

2. Procédé pour la préparation d'azodicarbamides contenant du silicium selon la revendication 1, **caractérisé en ce que** le composé azobiscarboxy de formule générale II est H₂N-C(O)-N=N-C(O)-NH₂, R³-O-C(O)-N=N-C(O)-O-R⁴ ou R³-HN-C(O)-N=N-C(O)-NH-R⁴.

3. Procédé pour la préparation d'azodicarbamides contenant du silicium selon la revendication 1 ou 2, **caractérisé en ce que** l'aminosilane de formule générale III est le 3-aminopropyl(triméthoxysilane), le 3-aminopropyl(triéthoxysilane), le 3-aminopropyl(diméthoxyméthylsilane), le 3-aminopropyl(méthoxydiméthylsilane), le 3-aminopropyl(diéthoxyméthylsilane), le 3-aminopropyl(éthoxydiméthylsilane) ou le 3-aminopropyl(tripropoxysilane).

4. Procédé pour la préparation d'azodicarbamides contenant du silicium selon la revendication 1, **caractérisé en ce qu'**on réalise la transformation dans un solvant.

5. Procédé pour la préparation d'azodicarbamides contenant du silicium selon la revendication 1, **caractérisé en ce qu'**on réalise la transformation sans solvant.

6. Procédé pour la préparation d'azodicarbamides contenant du silicium selon la revendication 1, **caractérisé en ce que** la transformation est réalisée à l'abri de l'air et/ou de l'eau.

7. Procédé pour la préparation d'azodicarbamides contenant du silicium selon la revendication 1, **caractérisé en ce que** des stabilisants sont ajoutés avant, pendant ou après la réaction.

8. Procédé pour la préparation d'azodicarbamides contenant du silicium selon la revendication 2, **caractérisé en ce qu'**on utilise comme composé de formule générale II, C₃H₇-O-C(O)-N=N-C(O)-O-C₃H₇ ou C₆H₄-CH₂-O-C(O)-N=N-C(O)-O-CH₂-C₆H₄.

9. Procédé pour la préparation d'azodicarbamides contenant du silicium selon la revendication 1, **caractérisé en ce qu'**on réalise la transformation à des températures entre -50 à +200°C.
